# EUROPÄISCHE PATENTSCHRIFT

(11) **EP 3 724 388 B1**
(45) Veröffentlichungstag und Bekanntmachung des Hinweises auf die Patenterteilung: **06.12.2023**
(21) Anmeldenummer: 18785573.9
(22) Anmeldetag: 08.10.2018
(51) Int. Cl.: D02G 3/48, B29B 15/12, B29D 30/38

(54) **HYBRIDCORD ZUR VERWENDUNG ALS FESTIGKEITSTRÄGER IN EINER GÜRTELBANDAGE EINES FAHRZEUGLUFTREIFENS UND VERWENDUNG**
HYBRID CORD FOR USE AS A STRENGTH MEMBER IN A BELT BANDAGE OF A PNEUMATIC VEHICLE TIRE AND USE
CÂBLÉ HYDRIDE À UTILISER COMME SUPPORT DE RENFORCEMENT DANS UNE BANDE FORMANT CEINTURE D'UN PNEUMATIQUE DE VÉHICULE ET UTILISATION

(30) Priorität: 15.12.2017 DE 102017222896
(43) Veröffentlichungstag der Anmeldung: 21.10.2020
(73) Patentinhaber: Continental Reifen Deutschland GmbH, 30165 Hannover (DE)
(72) Erfinder: REESE, Wolfgang, 30419 Hannover (DE); KRAMER, Thomas, 30419 Hannover (DE)
(74) Vertreter: Continental Corporation
(86) Internationale Anmeldenummer: PCT/EP2018/077248
(87) Internationale Veröffentlichungsnummer: WO 2019/115052

(56) Entgegenhaltungen:
- JP-A- H1 112 370
- JP-A- H06 286 414
- JP-A- H09 176 332
- JP-A- 2002 127 710
- JP-A- 2017 141 005
- JP-A- 2017 141 006
- US-A1- 2004 096 658

## Beschreibung

Die Erfindung betrifft einen Hybridcord zur Verwendung als Festigkeitsträger in einer Gürtelbandage eines Fahrzeugluftreifens, aufweisend zumindest zwei hochmodulige Garne und ein bis drei niedermodulige Garne, welche miteinander endverdreht sind. Ferner betrifft die Erfindung ein Verfahren zur Herstellung des Hybridcordes sowie dessen Verwendung.

Ein "Garn" ist im Rahmen der vorliegenden Erfindung in Anlehnung an die DIN 60900 ein linienförmiges Gebilde, das aus mehreren einzelnen Filamenten, d.h. Endlosfasern, besteht. Bevorzugt sind die Filamente des Garns miteinander verdreht. Im Rahmen der vorliegenden Erfindung stellen "Corde" linienförmige Gebilde dar, die aus zwei oder mehr miteinander endverdrehten Garnen bestehen.

Es sind unterschiedliche Hybridcorde für den Einsatz als Festigkeitsträger der Gürtelbandage bekannt. Ein "Hybridcord" stellt einen Cord dar, bei dem zwei oder mehr unterschiedliche Garne miteinander endverdreht sind. Bei einer solchen Hybridkonstruktion wird beispielsweise ein hochmoduliges Garn durch Vertwistung mit einem niedermoduligen Garn auf eine helikale Bahn gebracht. Hierdurch ist eine bestimmte konstruktive Dehnung des hochmoduligen Garns, welches rein vom Material her eine geringe Dehnfähigkeit aufweist, ermöglicht.

Das "niedermodulige Garn" und das "hochmodulige Garn" ist im Rahmen der Erfindung anhand der in der nachfolgenden Tabelle 1 beschriebenen Kraft-Dehnungseigenschaften definiert. Es ist dabei die Kraft bestimmt, die jeweils auf ein Garn bei 1 % Dehnung und bei 2 % Dehnung aufgebracht werden muss, normiert auf die Garnfeinheit in tex. Ermittelt wird nach ASTM D885.

**Tabelle 1**

| Garn \ Dehnung | 1 % | 2% |
|---|---|---|
| Niedermodulig | < 150 mN/tex | < 200 mN/tex |
| Hochmodulig | > 300 mN/tex | > 500 mN/tex |

Um bei Fahrzeugluftreifen, insbesondere beim Hochgeschwindigkeitseinsatz, eine Erhebung des Reifens durch die im Fahrbetrieb auftretenden Fliehkräfte zu verhindern, ist es bekannt, bei einem Fahrzeugluftreifen, der im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort durch Umschlingen zugfester Wulstkerne verankert ist, einen radial außen befindlichen, Profilrillen aufweisenden Gummilaufstreifen und einen Gürtel zwischen dem Gummilaufstreifen und der Karkasse aufweist, eine Gürtelbandage vorzusehen. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger in Form von Corden, die in Gummi eingebettet sind.

Die Gürtelbandage wird bei der Reifenherstellung in Form von Lagen mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit einer Kautschukmischung durchläuft. Bei der Bombage und Vulkanisation des Reifens erhebt/dehnt sich der Reifen in der Regel im Schulterbereich bis 2 % und im Mittenbereich bis 4 % im Vergleich zum unvulkanisierten Rohling.

Die Festigkeitsträger der Bandage sollen bei der Reifenherstellung eine ausreichende Erhebung bei der Bombage und in der Vulkanisationsform zulassen, damit der Reifen präzise ausgeformt werden kann.

Gleichzeitig sollen die Festigkeitsträger nach der Fertigstellung des Reifens im Fahrbetrieb eine gute Hochgeschwindigkeitstauglichkeit gewährleisten. Für die Hochgeschwindigkeitstauglichkeit ist eine hohe Umfangssteifigkeit des Reifens erforderlich, um auch bei hohen Geschwindigkeiten eine hohe Kurvensteifigkeit sicherzustellen.

Als Festigkeitsträger für die Bandage sind bereits unterschiedlichste Corde vorgeschlagen worden. So ist beispielsweise aus der EP 3 031 623 A1 für die Festigkeitsträgercorde in der Gürtelbandage ein Hybridcord offenbart, der aus einem erstverdrehten Garn aus Aramid (aromatisches Polyamid) einer Feinheit von 1680 dtex und einem erstverdrehten Garn aus Polyamid 6.6 einer Feinheit von 470 dtex, welche miteinander endverdreht sind, gebildet ist. Ein solcher Hybridcord weist ein spezielles Kraft-Dehnungs-Verhalten auf. Der Cord weist in einem Zugkraft-Dehnungs-Diagramm bei geringer Dehnung zunächst eine geringe Steigung der Kurve auf; bei höherer Dehnung steigt dann die Kurve überproportional stark an. In diesem letzten Bereich ist eine geringe weitere Dehnung mit hohem Kraftaufwand verbunden. Dieses Kraft-Dehnungs-Verhalten ermöglicht eine Erhebung bei der Bombage und der Vulkanisation. Es hat sich allerdings gezeigt, dass ein solch relativ dünner Hybridcord nicht ausreichend hohe Umfangskräfte aufbringt, um bei Hochgeschwindigkeit ausreichend gute Handling-Eigenschaften zu gewährleisten.

Um eine für den Einsatz im Hochgeschwindigkeitsbereich vorteilhafte Umfangssteifigkeit zu erlangen ist es aus der WO 2016023656 A1 bekannt, einen Hybridcord der Konstruktion Aramid 1680 x 2 + Nylon (Polyamid 6.6) 700 x 1 als Festigkeitsträger der Gürtelbandage zu verwenden. Hierbei sind zwei Aramidgarne und ein Polyamidgarn zu einem Hybridcord endverdreht.

Es hat sich aber ergeben, dass sich mit den Hybridcorden aus Aramid (aromatischen Polyamiden) und aliphatischem Polyamid noch nicht in jedem Fall die gewünschte Hochgeschwindigkeitstauglichkeit erreicht werden kann.

Als Fasermaterial mit einer deutlich höheren Reißfestigkeit als Aramid ist seit einiger Zeit das Material Poly(p-phenylen-2,6-benzobisoxazol), auch kurz PBO genannt, auf dem Markt.

Aus der KR 2009-0055785 A ist ein Hybridcord für die Karkasse von Fahrzeugreifen bekannt, der ein Garn aus Poly(p-phenylen-2,6-benzobisoxazol) und ein Garn aus Nylon aufweist. An Corde für die Karkasse werden gänzlich andere Anforderungen im Hinblick auf die Zugkraft-Dehnungs-Charakteristik gestellt als an Corde für die Gürtelbandage. Ferner ist aus der DE 10 2014 205 00 A1 ein Hybridcord für die Karkasse und/oder die Gürtelbandage von Fahrzeugluftreifen bekannt, der ein erstes Garn aus Polyoxadiazol und ein zweites Garn aus z. B. Aramid, Carbon, Glas, Poly(p-phenylen-2,6-benzobisoxazol), Polyetherketon oder Polyetheretherketon aufweist.

Außerdem ist aus der EP 1 489 207 A1 ein Hybridcord in Form eines Kabels zur Verstärkung von Gummiprodukten bekannt. Die dort beschriebenen Kabel weisen im Inneren Fäden mit einem hohen Elastizitätsmodul, wie Poly(p-phenylen-2,6-benzobisoxazol)-Fäden, auf, welche von Fäden mit geringem Elastizitätsmodul, wie Glasfaserfäden, umwickelt sind.

Hybridcorde aus zumindest zwei hochmoduligen Garnen und einem bis drei niedermoduligen Garnen, welche miteinander endverdreht sind, wobei die zumindest zwei hochmoduligen Garne solche aus PBO-Filamenten sind, sind beispielsweise aus der JP 2017 141005 A oder der JP 2017 141006 A bekannt. Dort werden diese Garnen in der Karkasse von Reifen eingesetzt.

Der Erfindung liegt die Aufgabe zugrunde, einen für den Einsatz als Gürtelbandage eines Fahrzeugluftreifens verbesserten Hybridcord bereitzustellen.

Gelöst wird die erfindungsgemäße Aufgabe dadurch, dass das niedermodulige Garn eine Feinheit von 350 bis 1000 dtex aufweist und dass der Hybridcord mit 200 bis 700 tpm endverdreht ist.

Es hat sich gezeigt, dass derartige Hybridcorde sich besonders gut als Gürtelbandagenmaterial von Fahrzeugluftreifen einsetzen lassen, da sie zunächst bei der Bombage und Vulkanisation des Reifens durch die Anwesenheit von 1 bis 3 niedermoduligen Garnen eine gewisse Dehnung erlauben, danach im Fahrbetrieb jedoch durch die Anwesenheit der zumindest zwei Garne aus Poly(p-phenylen-2,6-benzobisoxazol)-Filamenten eine weitere Dehnung stark erschwert ist, so dass eine hohe Umfangssteifigkeit vorliegt. Dies bewirkt beim Reifen eine sehr gute Hochgeschwindigkeitstauglichkeit.

Die besondere Eignung als Bandagenmaterial spiegelt sich auch darin wider, dass der erfindungsgemäße Hybridcord in der Zugkraft/Dehnungskurve bis 3 % Dehnung eine maximale Kraft von 150 N aufweist, nach 3 % Dehnung jedoch einen steilen Anstieg in der Zugkraft/Dehnungskurve zeigt.

Gemäß einer bevorzugten Weiterbildung der Erfindung weist der Hybridcord genau zwei Garne aus Poly(p-phenylen-2,6-benzobisoxazol)-Filamenten auf. Auf diese Weise kann im Hinblick auf den Einsatz als Gürtelbandage ein Optimum zwischen der Zugkraft bei 3 % Dehnung und der Zugkraft bei mehr als 3 % Dehnung erzielt werden.

Um die Festigkeit des Hybridcordes bei mehr als 3 % Dehnung weiter zu erhöhen, hat es sich als vorteilhaft erwiesen, wenn der Hybridcord genau ein niedermoduliges Garn aufweist.

Vorteilhafterweise besteht das niedermodulige Garn aus einem Polyamid oder aus einem Polyester. Das Polyamid (PA) kann ausgewählt sein aus der Gruppe bestehend aus PA 4.6, PA 6, PA 6.6, PA 10.10, PA, 10.4, PA 11 und PA12. Bevorzugt handelt es sich um PA 4.6, PA 6.6 oder PA 6. Das Polyester kann ausgewählt sein aus der Gruppe bestehend aus Polyethylennaphthalat (PEN), Polyethylenfuranoat (PEF), Polybutylenterephthalat (PBT), Polybutylennaphttalat (PBN), Polypropylenterephthalat (PPT), Polypropylennaphthalat (PPN), Polyethylenterephthalat (PET). Es kann sich um ein thermoplastisches Polyester und/oder um ein vernetztes ungesättigtes Polyester handeln. Bevorzugt handelt es sich um PET. Auch Stapelfasergarne aus Aramid sind beispielsweise einsetzbar.

Bevorzugt ist der Einsatz eines Garnes aus Polyamid 6.6 als niedermoduliges Garn im Hybridcord, für eine geringe Zugkraft bei 3 % Dehnung und ein kostengünstiges Material mit guter Haftung zu Gummi.

Das hochmodulige Garn weist im Hybridcord bevorzugt eine Feinheit von 100 bis 3500 dtex, besonders bevorzugt eine Feinheit von 1000 bis 3500 dtex, auf. Dadurch ergeben sich eine besonders vorteilhafte Kraft-Dehnungskurve und eine besonders gute Hochgeschwindigkeitstauglichkeit.

Das niedermodulige Garn weist im Hybridcord ine Feinheit von 350 bis 1000 dtex auf. Dadurch ergibt sich wiederum ein besonders vorteilhaftes Verhalten des Cordes während der Vulkanisation und Bombage des Reifens. Eine geringe Feinheit des niedermoduligen Garns ist außerdem kostengünstig in der Bereitstellung des Garns und ermöglicht über einen geringen Materialeinsatz eine Reduzierung des Rollwiderstandes.

Der Hybridcord ist mit 200 bis 700 tpm (turn per meter), vorzugsweise 300 bis 400 tpm endverdreht. Ein Hybridcord mit solchen Endverdrehungen zeichnet sich durch ein Kraft-Dehnungs-Verhalten aus, das bei Verwendung als Gürtelbandage in Fahrzeugluftreifen, einen problemlosen Reifenbau samt Vulkanisation ermöglicht und dem Reifen eine große Hochgeschwindigkeitstauglichkeit sowie eine gute Ermüdungsbeständigkeit verleiht.

Besonders zweckmäßige Ausführungsformen des Hybridgarns weisen die Konstruktion Poly(p-phenylen-2,6-benzobisoxazol) 1640 x 2 + PA6.6 470 x 1 oder Poly(p-phenylen-2,6-benzobisoxazol) 1100 x 2 + PA 6.6 470 x 1 auf.

Der erfindungsgemäße Hybridcord wird durch ein Verfahren mit zumindest folgenden Schritten hergestellt:
a) Bereitstellen eines Hybridcordes, aufweisend zumindest zwei hochmodulige Garne aus Poly(p-phenylen-2,6-benzobisoxazol)-Filamenten und ein bis drei niedermodulige Garne, welche miteinander endverdreht sind, in Form eines endlosen Einzelcordes,
b) Hindurchführen des Hybridcordes durch ein Atmosphärendruckplasma mit Luft als Prozessgas mit einer Spannung bis zur 15 kV, einer Frequenz bis zu 100 kHz und einer Leistung bis zu 1500 W zur Aktivierung der Oberfläche der Filamente aus Poly(p-phenylen-2,6-benzobisoxazol),
c) maximal 60 s nach der Plasmabehandlung direktes Hindurchführen des Hybridcordes durch ein erstes Tauchbad mit einem Vordip auf der Basis von Epoxyverbindungen oder geblockten Isocyanaten,
d) Herausführen des Hybridcordes aus dem ersten Tauchbad,
e) Weiterführen des Hybridcordes durch eine Trocknungsvorrichtung,
f) Weiterführen des Hybridcordes durch eine Ausheizvorrichtung zur Reaktion des Vordips mit der Oberfläche des Hybridcordes,
g) Hindurchführen des Hybridcordes durch ein zweites Tauchbad mit einem RFL-Dip (Resorcin-Formaldehyd-Latex-Dip),
h) Herausführen des Hybridcordes aus dem zweiten Tauchbad,
i) Weiterführen des Hybridcordes durch eine Trocknungsvorrichtung,
j) Weiterführen des Hybridcordes durch eine Ausheizvorrichtung zur Reaktion des RFL-Dips mit der Oberfläche des Hybridcordes.

Das Verfahren lässt sich einfach und kostengünstig durchführen, da nur ein Atmosphärendruckplasma mit Luft als Prozessgas zum Einsatz kommt. Der Hybridcord durchläuft nach der Plasmabehandlung zunächst ein erstes Tauchbad mit einem Vordip auf der Basis von Epoxyverbindungen oder geblockten Isocyanaten. Dies sind übliche Vordips, die dem Fachmann auch zur Behandlung von Aramidcorden bekannt sind. Anschließend durchläuft der Hybridcord ein zweites Tauchbad mit einem RFL-Dip.

Überraschenderweise hat sich gezeigt, dass nach diesem Verfahren erzeugte Hybridcorde bei Verwendung als Gürtelbandage von Fahrzeugluftreifen eine gute Haftung zwischen Gummi und Hybridcord aufweisen. Dabei ist es wichtig, das zwischen der Plasmabehandlung und dem ersten Tauchbad nicht mehr als 60 s vergehen, da mit der Plasmabehandlung scheinbar reaktive Gruppen auf der Oberfläche des Hybridcordes und da insbesondere auf der sonst sehr inerten Oberfläche der Poly(p-phenylen-2,6-benzobisoxazol)-Filamente erzeugt werden, die eine Anbindung die Bestandteile des Dips ermöglichen. Lässt man mehr Zeit verstreichen, kann diese Anbindung vermutlich nicht mehr in ausreichendem Maße erfolgen.

Die Leistung des Plasmagerätes sollte 1500 W nicht überschreiten, um die niedermoduligen Garne des Hybridcordes nicht zu schädigen.

Gemäß einer vorteilhaften Weiterbildung beträgt die Zeit zwischen Plasmabehandlung und dem Tauchbad maximal 40 s. Auf diese Weise wird eine besonders große Anzahl an reaktiven Gruppen auf der Oberfläche des Hybridcordes vor dem Einführen in das Tauchbad gewährleistet.

Um das Verfahren kostengünstig zu gestalten, hat es sich als vorteilhaft erwiesen, wenn die Trocknung und das Ausheizen kontinuierlich, beispielsweise in Durchlauföfen, durchgeführt werden.

Vorzugsweise finden die Trocknung und das Ausheizen bei Temperaturen von 100 bis 280 °C statt, um das Verfahren zu beschleunigen.

Der erfindungsgemäße Hybridcord findet aufgrund seines Kraft-Dehnungsverhaltens bevorzugt Verwendung als Gürtelbandage eines Fahrzeugluftreifens und wird bei der Herstellung des Reifens in üblicher, dem Fachmann bekannter Weise eingesetzt. Es handelt sich dabei z. B. um Festigkeitsträgerlagen, in denen die Hybridcorde parallel zueinander angeordnet und in elastomeres Material eingebettet sind.

Anhand eines Ausführungsbeispiels soll die Erfindung näher erläutert werden.

Es wurde ein Hybridcord aus zwei Poly(p-phenylen-2,6-benzobisoxazol)-Garnen der Feinheit 1640 dtex und einem Polyamid 6.6-Garn mit einer Feinheit von 470 dtex verwendet (Konstruktion: Poly(p-phenylen-2,6-benzobisoxazol) 1640x2 + PA 6.6 470x1). Die Garne waren jeweils mit einer Erstverdrehung von 370 tpm in S-Richtung verdreht und dann mit einer Endverdrehung von 370 tpm in Z-Richtung zum Hybridcord endverdreht.

Der Hybridcord wurde in Form eines endlosen Einzelcordes durch ein Atmosphärendruckplasma mit Luft als Prozessgas kontinuierlich geführt. Die Erzeugung des Plasmas erfolgte mit einem MonoJet der Firma Advanced Machines, Schweiz (Leistung: 200 bis 2000 W) bei einer Leistungseinstellung von 60 % und einer Strömungsgeschwindigkeit von 30 L/min. Dadurch wurde die Oberfläche des Cordes aktiviert. Der Cord wurde kontinuierlich weitergeführt und gelangte nach ca. 5 s in ein Tauchbad aus einem Vordip auf der Basis einer Epoxyverbindung. Nach dem Herausführen aus dem Tauchbad wurde der Cord zunächst zur Trocknung durch einen Trocknungsofen bei einer Temperatur von 165 °C kontinuierlich geführt. Anschließend wurde der Cord durch einen weiteren Ofen als Ausheizvorrichtung zur Reaktion der reaktiven Oberfläche mit dem Vordip kontinuierlich geführt. Dieser zweite Ofen wies eine Temperatur von 235 °C auf. Anschließend wurde der Hybridcord durch ein zweites Tauchbad mit einem üblichen RFL-Dip (Resorcin-Formaldehyd-Latex-Dip) geführt. Nach dem Herausführen aus dem zweiten Tauchbad wurde der Cord zunächst zur Trocknung durch einen Trocknungsofen bei einer Temperatur von 165 °C kontinuierlich geführt. Anschließend wurde der Cord durch einen weiteren Ofen als Ausheizvorrichtung zur Reaktion des RFL-Dips mit der Cordoberfläche kontinuierlich geführt. Dieser zweite Ofen wies eine Temperatur von 235 °C auf.

Als Referenz wurde ein Hybridcord der Konstruktion Aramid 1670x2 + Polyamid 6.6 470x1 auf die gleiche Weise behandelt.

Von den beiden Hybridcorden, dem erfindungsgemäßen Cord und dem Referenzcord, wurden Zugkraft-Dehnungskurven aufgenommen. Beide Hybridcorde weisen bei 3 % Dehnung eine geringe Zugkraft auf, wohingegen nach 3 % Dehnung die Kurven stark auseinander driften. Der erfindungsgemäße Hybridcord zeigt einen deutlich steileren Anstieg in der Kurve. Dieses Verhalten des erfindungsgemäßen Corde geht einher mit einem hervorragenden Tauglichkeit als Gürtelbandage von Fahrzeugluftreifen, denn die Bombage und

Vulkanisation können unter Dehnung erfolgen, während die Hochgeschwindigkeitstauglichkeit durch den steilen Anstieg der Zugkraft nach 3 % Dehnung gewährleistet wird.

Beide Corde, der erfindungsgemäße Cord und der Referenzcord, wurden auch hinsichtlich der Haftkraft und der Bedeckung untersucht. Es wurden Haftungstest mit einer üblichen Gummierungsmischung für textile Festigkeitsträger gemäß ISO 36:2011 durchgeführt. Die vulkanisierten Proben wurden für 30 min auf 120 °C erhitzt und der Haftungstest innerhalb von 30 Sekunden nach Herausnahme aus dem Ofen durchgeführt. Die Bewertung der Haftkraft wurde gemäß DIN ISO 6133 durchgeführt, wobei die Haftkraft des Referenzcordes gleich 100 % gesetzt wurde. Zudem wurde die Trennfläche im Hinblick auf die Bedeckung mit Gummierungsmischung bewertet. Diese Bewertung erfolgte durch visuelle Kontrolle gemäß ASTM D4393. Für jedes Beispiel stellen die angegebene Haftkraft und die angegebene Bedeckung den Mittelwert aus jeweils drei Messungen dar. Die Ergebnisse sind in Tabelle 2 dargestellt.

**Tabelle 2**

| | Hybridcord PBO 1640x2 + Polyamid 6.6 470x1 | Referenzhybridcord Aramid 1670x2 + Polyamid 6.6 470x1 |
|---|---|---|
| Haftkraft | 105 % | 100 % |
| Bedeckung | 95 % | 100 % |

Aus der Tabelle 2 wird ersichtlich, dass der nach dem erfindungsgemäßen Verfahren hergestellte Hybridcord mit der Plasmabehandlung unmittelbar vor den Tauchbädern zu einer guten Haftung bei einer guten Bedeckung führt. Derartige Corde eignen sich daher als Bandagenmaterial, da eine Haltbarkeit des Reifens durch die Cord-Gummi-Haftung gewährleistet ist.

## Patentansprüche

1. Hybridcord zur Verwendung als Festigkeitsträger in einer Gürtelbandage eines Fahrzeugluftreifens, aufweisend zumindest zwei hochmodulige Garne und ein bis drei niedermodulige Garne, welche miteinander endverdreht sind, wobei die zumindest zwei hochmoduligen Garne solche aus Poly(p-phenylen-2,6-benzobisoxazol)-Filamenten sind, und wobei niedermodulige Garne und hochmodulige Garne gemäß folgender Tabelle 1 definiert sind, dabei ist die Kraft gemäß ASTM D885 bestimmt, die jeweils auf ein Garn bei 1 % Dehnung und bei 2 % Dehnung aufgebracht werden muss, normiert auf die Garnfeinheit in tex,
**Tabelle 1**
| Garn \ Dehnung | 1 % | 2% |
|---|---|---|
| Niedermodulig | < 150 mN/tex | < 200 mN/tex |
| Hochmodulig | > 300 mN/tex | > 500 mN/tex |
**dadurch gekennzeichnet, dass**
das niedermodulige Garn eine Feinheit von 350 bis 1000 dtex aufweist und dass der Hybridcord mit 200 bis 700 tpm endverdreht ist.

2. Hybridcord nach Anspruch 1, **dadurch gekennzeichnet, dass** er genau zwei Garne aus Poly(p-phenylen-2,6-benzobisoxazol)-Filamenten aufweist.

3. Hybridcord nach Anspruch 1 oder 2, **dadurch gekennzeichnet, dass** er genau ein niedermoduliges Garn aufweist.

4. Hybridcord nach zumindest einem der vorhergehenden Ansprüche, **dadurch gekennzeichnet, dass** das niedermodulige Garn ein Garn aus Polyamid 6.6 ist.

5. Hybridcord nach zumindest einem der vorhergehenden Ansprüche, **dadurch gekennzeichnet, dass** das hochmodulige Garn eine Feinheit von 200 bis 3500 dtex, vorzugsweise eine Feinheit von 1000 bis 3500 dtex, aufweist.

6. Hybridcord nach zumindest einem der vorhergehenden Ansprüche, **dadurch gekennzeichnet, dass** er mit 300 bis 400 tpm endverdreht ist.

7. Verwendung des Hybridcordes nach Anspruch 1 als Gürtelbandage eines Fahrzeugluftreifens.

## Claims

1. Hybrid cord for use as a strength member in a belt bandage of a pneumatic vehicle tire comprising at least two high-modulus yarns and one to three low-modulus yarns end-twisted with one another, wherein the at least two high-modulus yarns are high-modulus yarns made of poly(p-phenylene-2,6-benzobisoxazole) filaments and wherein low-modulus yarns and high-modulus yarns are defined according to the following table 1, where the respective force which has to be applied to a yarn to achieve 1% elongation and 2% elongation normalized to yarn fineness in tex is determined according to ASTM D885,
**Table 1**
| Yarn/elongation | 1% | 2% |
|---|---|---|
| Low-modulus | < 150 mN/tex | < 200 mN/tex |
| High-modulus | > 300 mN/tex | > 500 mN/tex |
**characterized in that**
the low-modulus yarn has a fineness of 350 to 1000 dtex and **in that** the hybrid cord is end-twisted with 200 to 700 tpm.

2. Hybrid cord according to Claim 1, **characterized in that** it comprises precisely two yarns made of poly(p-phenylene-2,6-benzobisoxazole) filaments.

3. Hybrid cord according to Claim 1 or 2, **characterized in that** it comprises precisely one low-modulus yarn.

4. Hybrid cord according to at least one of the preceding claims, **characterized in that** the low-modulus yarn is a yarn made of polyamide 6.6.

5. Hybrid cord according to at least one of the preceding claims, **characterized in that** the high-modulus yarn has a fineness of 200 to 3500 dtex, preferably a fineness of 1000 to 3500 dtex.

6. Hybrid cord according to at least one of the preceding claims, **characterized in that** it is end-twisted with 300 to 400 tpm.

7. Use of the hybrid cord according to Claim 1 as a belt bandage of a pneumatic tire.

## Revendications

1. Câblé hybride pour utilisation comme élément de renforcement dans un bandage de ceinture d'un pneumatique de véhicule, comportant au moins deux fils à module élevé et un à trois fils à faible module, qui sont torsadés en bout l'un avec l'autre, les au moins deux fils à module élevé étant des fils en filaments de poly(p-phénylène-2,6-benzobisoxazole), et les fils à faible module et les fils à module élevé étant définis selon le Tableau 1 ci-après, la force étant déterminée selon ASTM D885, force qui doit être appliquée à un fil, pour un allongement de 1 % et pour un allongement de 2 %, normalisée à la finesse des fils, en tex,
**Tableau 1**
| Fil / allongement | 1 % | 2% |
|---|---|---|
| À faible module | < 150 mN/tex | < 200 mN/tex |
| À module élevé | > 300 mN/tex | > 500 mN/tex |
**caractérisé en ce que** le fil à faible module présente une finesse de 350 à 1 000 dtex, et que le câblé hybride est torsadé en bout avec 200 à 700 tr/m.

2. Câblé hybride selon la revendication 1, **caractérisé en ce qu'**il comprend exactement deux fils en filaments de poly(p-phénylène-2,6-benzobisoxazole).

3. Câblé hybride selon la revendication 1 ou 2, **caractérisé en ce qu'**il comprend exactement un fil à module élevé.

4. Câblé hybride selon au moins l'une des revendications précédentes, **caractérisé en ce que** le fil à faible module est un fil en polyamide 6.6.

5. Câblé hybride selon au moins l'une des revendications précédentes, **caractérisé en ce que** le fil à module élevé présente une finesse de 200 à 3 500 dtex, de préférence une finesse de 1 000 à 3 500 dtex.

6. Câblé hybride selon au moins l'une des revendications précédentes, **caractérisé en ce qu'**il est torsadé en bout avec 300 à 400 tr/m.

7. Utilisation du câblé hybride selon la revendication 1 en tant que bandage de ceinture d'un pneumatique de véhicule.
